# EUROPEAN PATENT APPLICATION

(11) **EP 4 835 787 A1**
(43) Date of publication of application: **04.11.2026**
(21) Application number: 24911345.7
(22) Date of filing: 26.12.2024
(51) Int. Cl.: G06Q 30/018, G06Q 10/0831, G06F 16/903, G06F 40/216, G06F 40/284, G06N 5/022, G06N 3/0442, G06N 3/0455

(54) **RISK DETECTION METHOD AND APPARATUS, AND STORAGE MEDIUM**

(30) Priority: 28.12.2023 CN 202311830704
(71) Applicant: Tsinghua University, Haidian District Beijing 100084 (CN); Nuctech Company Limited, TongFang Building Shuangqinglu Haidian District Beijing 100084 (CN); Nuctech Jiangsu Company Limited, Changzhou, Jiangsu 213200 (CN)
(72) Inventor: ZHANG, Li, Beijing 100084 (CN); SHI, Zhengyan, Beijing 100084 (CN); YANG, Liu, Beijing 100084 (CN); SUN, Yunda, Beijing 100084 (CN); LI, Bowen, Beijing 100084 (CN); LI, Yingting, Beijing 100084 (CN); LI, Wei, Beijing 100084 (CN); ZHANG, Jin, Beijing 100084 (CN)
(74) Representative: Gunzelmann, Rainer
(86) International application number: PCT/CN2024/142756
(87) International publication number: WO 2025/140424

(57) **Abstract**

The present disclosure provides a risk detection method and apparatus, and a storage medium. The risk detection method comprises : identifying ingredient content information of an edible commodity that is comprised in customs clearance data, in order to obtain a plurality of ingredient names and corresponding content data; comparing the plurality of ingredient names and the corresponding content data with those in a predetermined food safety standard database to determine a first risk value of the edible commodity; on the basis a food access knowledge base, determining a second risk value of a plurality of pieces of access information of the edible commodity that are comprised in the customs clearance data; acquiring historical risk information of the edible commodity; on the basis of the historical risk information, determining a third risk value of the edible commodity; and on the basis of the first risk value, the second risk value and the third risk value, determining an import risk value of the edible commodity.

## Description

### CROSS-REFERENCE TO RELATED APPLICATIONS

The present disclosure is based on and claims priority of Chinese application for invention No. 202311830704.7, filed on Dec. 28, 2023, the disclosure of hereby incorporated into this disclosure by reference in its entirety.

### TECHNICAL FIELD

The present disclosure relates to the field of security admittance, particularly to a risk detection method and apparatus, and a storage medium.

### BACKGROUND

Security admittance is a business scenario that draws significant attention from customs authorities, sharing common ground with other prevalent business areas such as tax collection and administration, bonded R&D (Research and Development), RCEP (Regional Comprehensive Economic Partnership), epidemic prevention and control, and cross-border e-commerce. In the context of security admittance, specifically concerning safety inspections for imported goods, a variety of issues frequently arise during the inspection of customs declarations for edible commodities. These problems include discrepancies or incompleteness in documentation, non-compliance with origin standards, excessive ingredient content, unauthorized use of certain substances, and expiration of shelf life, among others. Consequently, the regulatory oversight of security admittance for edible commodities faces multifaceted challenges.

Currently, to ensure the safety of imports, manual methods are primarily employed to conduct risk detection for edible commodities during the import process.

### SUMMARY

According to the first aspect of the present disclosure, there is provided a risk detection method, comprising: identifying ingredient content information of an edible commodity comprised in customs clearance data to obtain a plurality of ingredient names and a plurality of content values corresponding to the plurality of ingredient names; comparing the plurality of ingredient names and the plurality of content values with a predetermined food safety standard database to determine a first risk score of the edible commodity; determining, based on a food access knowledge base, a second risk score of a plurality of access information of the edible commodity comprised in the customs clearance data; obtaining historical risk information of the edible commodity; determining a third risk score of the edible commodity based on the historical risk information; and determining an import risk score of the edible commodity based on the first risk score, the second risk score, and the third risk score.

In some embodiments, the determining the import risk score of the edible commodity comprises: determining the import risk score of the edible commodity based on a sum of the first risk score, the second risk score, and the third risk score.

In some embodiments, the identifying the ingredient content information of the edible commodity comprised in the customs clearance data comprises: processing the ingredient content information by using a first machine learning model to obtain embeddings; processing the embeddings by using a second machine learning model to obtain a feature vector; processing the feature vector by using a third machine learning model to obtain an identification result, wherein the identification result comprises the plurality of ingredient names and the plurality of content values; and optimizing a correspondence between the plurality of ingredient names and the plurality of content values.

In some embodiments, the optimizing the correspondence between the plurality of ingredient names and the plurality of content values comprises: adding a punctuation mark after each ingredient name and after each content value in the identification result; using a punctuation mark after a second information that follows a first information to be processed as a grouping boundary, wherein the first information is one of an ingredient name or a content value, and the second information is the other of the ingredient name or the content value; and establishing a correspondence between the first information and the second information.

In some embodiments, the optimizing the correspondence between the plurality of ingredient names and the plurality of content values comprises: identifying content within parentheses comprised in the identification result, wherein an ingredient name is inside the parentheses, and an ingredient name adjacent to the parentheses and a content value adjacent to the parentheses are respectively positioned on opposing sides outside the parentheses; and establishing a correspondence among the content, the ingredient name adjacent to the parentheses and the content value adjacent to the parentheses.

In some embodiments, the optimizing the correspondence between the plurality of ingredient names and the plurality of content values comprises: generating first identification information and second identification information, wherein the identification result comprises a connector, with a first content value positioned on the left of the connector and a second content value positioned on the right, the first identification information comprises information that an ingredient name associated with the connector is greater than the first content value, and the second identification information comprises information that the ingredient name associated with the connector is less than the second content value.

In some embodiments, the optimizing the correspondence between the plurality of ingredient names and the plurality of content values comprises: adding a punctuation mark after each ingredient name and each content value in the identification result; using the punctuation mark as a grouping boundary to obtain a plurality of groups, wherein in a case where a group comprises only one ingredient name, a predetermined content value is added after the one ingredient name; and in a case where a group comprises only one content value, a predetermined ingredient name is added before the content value; and merging adjacent first group and second group, wherein the first group comprises a first ingredient name and a predetermined content value, and the second group comprises a predetermined ingredient name and a second content value, and deleting the predetermined ingredient name and the predetermined content value to establish a correspondence between the first ingredient name and the second content value.

In some embodiments, the first machine learning model is a BERT model; the second machine learning model is a BiLSTM model; and the third machine learning model is a CRF model.

In some embodiments, the access information comprises whether the edible commodity has exceeded shelf life, and further comprises at least one of: whether a country of origin of the edible commodity is permitted for access; whether the edible commodity has an origin certification document; whether a consignee of the edible commodity holds an import license; whether a manufacturing enterprise of the edible commodity is validly registered; whether the manufacturing enterprise of the edible commodity has a production and processing license; or whether the manufacturing enterprise of the edible commodity has an inspection and quarantine certificate.

In some embodiments, the historical risk information comprises at least one of: a historical risk of a country of origin of the edible commodity; a historical risk of a manufacturer of the edible commodity; a historical risk of the edible commodity; a packaging dispersion of the edible commodity; a historical number of amendment requests made by the declaring entity of the edible commodity; or a degree to which the edible commodity is close to expiration.

In some embodiments, the determining the third risk score of the edible commodity based on the historical risk information comprises: processing the historical risk information by using an ensemble learning model to obtain the third risk score.

In some embodiments, the method further comprising: generating a first risk vector, wherein the i-th element in the first risk vector corresponds to the risk score of the i-th access information among the plurality of access information, with 1 ≤ i ≤ **N**, N being the total number of the plurality of access information; and inserting the first risk score and the third risk score into the first risk vector to obtain a second risk vector.

In some embodiments, the method further comprising: generating first risk description information for the edible commodity, wherein the first risk description information comprises an ingredient whose content does not meet a requirement of the food safety standards database; generating second risk description information for the edible commodity, wherein the second risk description information comprises an access information that does not satisfy a requirement of the food access knowledge base; and generating risk cause information for the edible commodity based on the first risk description information and the second risk description information.

According to the second aspect of the present disclosure, there is provided a risk detection apparatus, comprising: at least one processor; and at least one memory coupled to the at least one processor, storing program instructions which, when executed by the at least one processor, cause the processor to implement the method according to any one of the above embodiments.

According to the third aspect of the present disclosure, there is provided a computer readable storage medium stored thereon computer instructions that, when executed by a processor, implement the risk detection method according to any one of the above embodiments.

According to the fourth aspect of the present disclosure, there is provided a computer program comprising computer instructions that, when executed by a processor, implement the risk detection method according to any one of the above embodiments.

Other features and advantages of the present invention will become apparent from the following detailed description of exemplary embodiments of the present disclosure with reference to the accompanying drawings.

### BRIEF DESCRIPTION OF THE DRAWINGS

In order to more clearly explain the embodiments of the present invention or the technical solutions in the prior art, a brief introduction will be given below for the drawings required to be used in the description of the embodiments or the prior art. It is obvious that, the drawings illustrated as follows are merely some embodiments of the present disclosure. For a person skilled in the art, he or she may also acquire other drawings according to such drawings on the premise that no inventive effort is involved.
FIG. 1 is a flowchart of a risk detection method according to one embodiment of the present disclosure;
FIG. 2 is a schematic diagram of a linear-chain conditional random field according to one embodiment of the present disclosure;
FIG. 3 is a flowchart of a risk detection method according to another embodiment of the present disclosure;
FIG. 4 is a schematic structural diagram of a risk detection apparatus according to an embodiment of the present disclosure.

### DETAILED DESCRIPTION

Below, a clear and complete description will be given for the technical solution of embodiments of the present disclosure with reference to the figures of the embodiments. Obviously, merely some embodiments of the present disclosure, rather than all embodiments thereof, are given herein. The following description of at least one exemplary embodiment is in fact merely illustrative and is in no way intended as a limitation to the invention, its application or use. All other embodiments obtained by persons of ordinary skill in the art based on the embodiments of the present disclosure without creative efforts shall fall within the protection scope of the present disclosure.

Unless otherwise specified, the relative arrangement, numerical expressions and values of the components and steps set forth in these examples do not limit the scope of the invention.

At the same time, it should be understood that, for ease of description, the dimensions of the various parts shown in the drawings are not drawn to actual proportions.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an item is defined in a drawing, there is no need for further discussion in the accompanying drawings.

The inventors found that in related technologies, import risk detection of edible commodities is mainly carried out manually. Since the risk detection results are susceptible to human factors, objective detection results cannot be obtained.

Accordingly, the present disclosure provides a risk detection method that can obtain objective and accurate risk detection results.

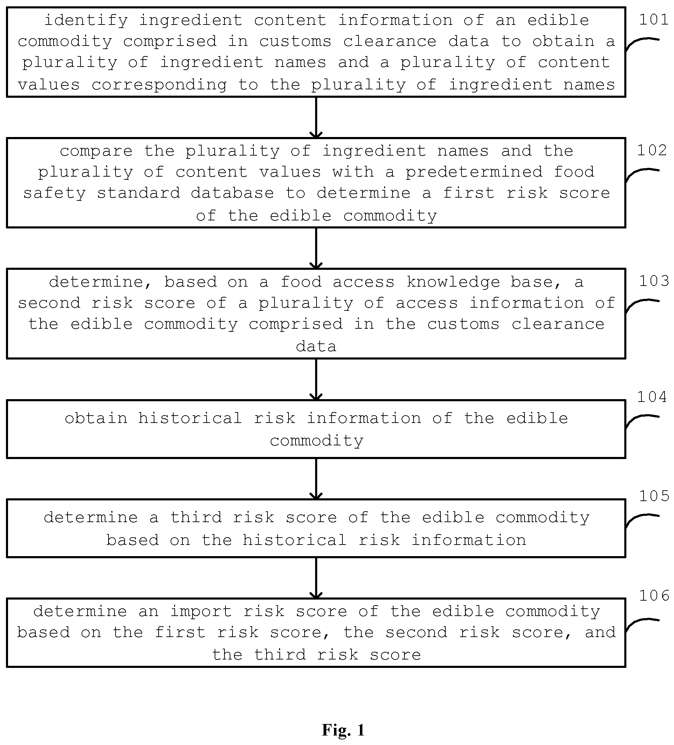

FIG. 1 is a flowchart of a risk detection method according to one embodiment of the present disclosure. In some embodiments, the following risk detection method is performed by a risk detection apparatus.

In step 101, ingredient content information of an edible commodity comprised in customs clearance data is identified to obtain a plurality of ingredient names and a plurality of content values corresponding to the plurality of ingredient names.

In some embodiments, the identifying the ingredient content information of the edible commodity comprised in the customs clearance data comprises the following steps.
1) The ingredient content information is processed by using a first machine learning model to obtain embeddings.

For example, the first machine learning model is the BERT (Bidirectional Encoder Representatives from Transformers) model.

It should be noted here that bidirectionally trained language models are more effective than unidirectional language models in deeply perceiving the linguistic context. The Transformer comprises an encoder that reads textual input and a decoder that generates predictions for tasks, whereas the BERT model only requires the encoder mechanism.

The BERT model employs two pre-training tasks during its training process: Masked LM (Masked Language Model) and Next Sentence Prediction (NSP). For example, during the BERT masking process, 15% of the characters are masked, and then the model is required to predict the masked characters. The other NSP task is to predict the relationship between a preceding sentence and a following sentence, specifically predicting whether the two text segments appear consecutively in the original text.

The input to the BERT model comprises the ingredient content information, which is transformed by the BERT model into text embeddings.

2) The embeddings is processed by using a second machine learning model to obtain a feature vector.

In some embodiments, the second machine learning model is a BiLSTM (Bi-directional Long Short-Term Memory) model.

It should be noted that the inputs to traditional neural networks are relatively independent of each other, making these models suitable for scenarios where the relationships among the input data are not highly interconnected. However, in certain scenarios, such as those involving textual data, there is a connection between the first word to be input and the second one. For scenarios where prior information needs to be taken into account, RNN (Recurrent Neural Network) is applicable. However, as time progresses continuously in RNN, when there is a significant time gap between t1 and t0, the model may have lost the ability to retain and utilize the information learned at t0. The LSTM (Long Short Term Memory) model is designed to solve long-term dependency problems by deliberately avoiding them.

Sometimes, the prediction may be determined by a combination of a number of preceding inputs and a number of subsequent inputs, which can enhance the accuracy of the prediction. Therefore, the Bidirectional Recurrent Neural Network (BiRNN) has been proposed. BiLSTM (Bi-directional Long Short-Term Memory), an extension of LSTM, trains two LSTMs on the input sequence. The two layers are arranged side by side, with the input sequence fed into the first layer unchanged and a reversed copy of it passed to the second layer, facilitating more comprehensive learning.

The BiLSTM model obtains embeddings generated by the Bert model and outputs feature vectors.

3) The feature vector is processed by using a third machine learning model to obtain an identification result, wherein the identification result comprises the plurality of ingredient names and the plurality of content values.

In some embodiments, the third machine learning model is a CRF (Conditional Random Field) model.

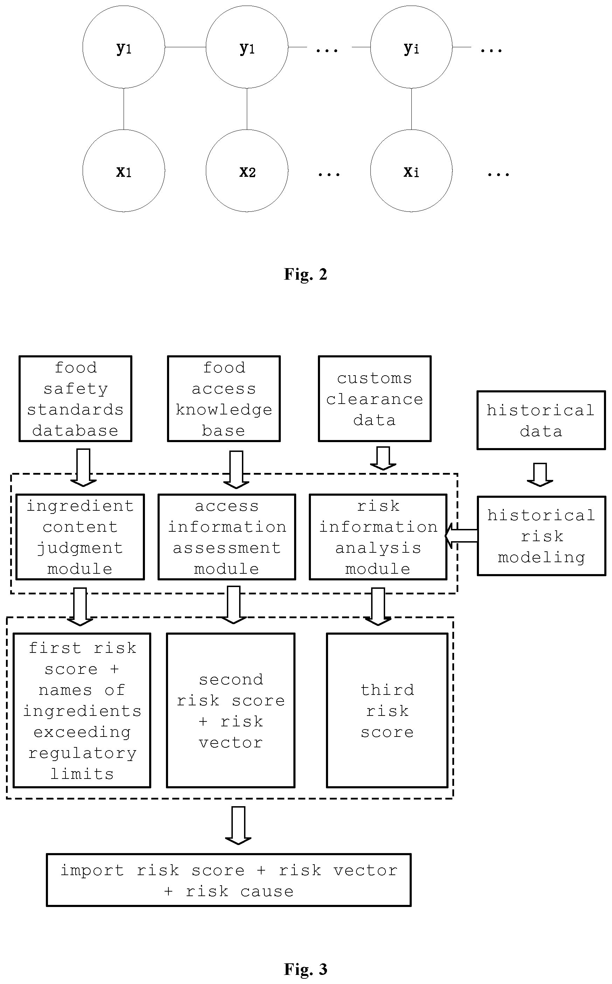

For example, as illustrated in FIG. 2, assuming that graph G contains multiple maximal cliques C, the joint probability distribution *P*(*Y*) can be decomposed into a product form of functions *ψ_{c}*(*Y_{C}*) of random variables over these maximal cliques.$P \left(Y\right) = \frac{1}{Z} {\prod }_{C} {ψ}_{c} \left({Y}_{C}\right)$ (1)

The equation ***P*(*Yᵥ*|*X*, *Y_{w}*) = *P*(*Yᵥ*|*X*, *Y_{U}*)** holds for any node v, where w is not equal to v and and U represents all nodes connected to v. In part-of-speech tagging, the primary focus is on linear-chain Conditional Random Fields (CRFs) . If ***X* = {*x*₁, *x*₂**, ... , ***xₙ*}, *Y =* {*y*₁, *y*₂**, ... , ***yₙ*} ,** then ***P*(*yᵢ*|*X, y*₁, *y*₂,** ... , ***y*_{*i*-1}, *y*_{*i*+1}, ... , *yₙ* ) = *P*(*yᵢ*|*X, y*_{*i*-1}, *y*_{*i+*1})*.***$\begin{matrix}P \left(Y\left|X\right.\right) = \frac{1}{Z} {\prod }_{i} {ψ}_{i} \left({Y}_{i - 1}, {Y}_{i},X\right) \\ = \frac{1}{Z} {\prod }_{i} exp \left[{\sum }_{h} {f}_{h} \left({Y}_{i - 1}, {Y}_{i},X, i\right) + {\sum }_{l} {k}_{l} \left({Y}_{i},X, i\right)\right] \\ = \frac{1}{Z} exp \left[{\sum }_{h , i} {f}_{h} \left({Y}_{i - 1}, {Y}_{i},X, i\right) + {\sum }_{l , i} {k}_{l} \left({Y}_{i},X, i\right)\right]\end{matrix}$ (2)

Here, the feature vectors output by the BiLSTM model are fed into the CRF model. To maximize the posterior probability, an optimal path (label selection for characters) is needed. Generally, dynamic programming is used to find sub-paths to output a corresponding "path" (optimal label combination).

4) A correspondence between the plurality of ingredient names and the plurality of content values is optimized.

The optimization process is illustrated below with reference to specific embodiments.

### Embodiment 1

For example, the ingredient content information comprises "Gardenia Yellow 3.5%, 4% Caramel, and Gellan Gum 70%". If the "Gardenia Yellow" is not identified, a mismatch between the ingredient names and the content values will occur, as shown in Table 1.

**Table 1**

| | |
|---|---|
| Ingredient content information | Gardenia Yellow 3.5%, 4% Caramel, Gellan Gum 70% |
| Processing result | Gardenia Yellow (3.5% Caramel) (4% Gellan Gum) 70% |

To avoid mismatches, a punctuation mark is added after each ingredient name and after each content value in the identification result. A punctuation mark after a second information that follows a first information to be processed is used as a grouping boundary, wherein the first information is one of an ingredient name or a content value, and the second information is the other of the ingredient name or the content value, and a correspondence between the first information and the second information is established.

It should also be noted that if the punctuation mark is already present after each ingredient name and each content value in the identification result, there is no need to add additional punctuation marks in this case. Instead, the existing punctuation marks can be directly used for grouping.

For example, if the first information to be processed is an ingredient name "Gardenia Yellow", and the second information after the first information is a content value "3.5%", then "Gardenia Yellow" should correspond to "3.5%". Next, if the first information to be processed is an ingredient name "Caramel", and the second information after the first information is a content value "4%", then "Caramel" should correspond to "4%". Next, if the first information to be processed is an ingredient name "Gellan Gum", and the second information after the first information is a content value "70%", then "Gellan Gum" should correspond to "70%". The matching results are shown in Table 2. As can be seen from Table 2, the mismatch issues that appeared in Table 1 above have been effectively resolved.

**Table 2**

| | |
|---|---|
| Ingredient content information | Gardenia Yellow 3.5%, 4% Caramel, Gellan Gum 70% |
| Optimization result | (Gardenia Yellow, 3.5%), (Caramel, 4%), (Gellan Gum, 70%) |

For example, as shown in Table 3, if the first information to be processed is a content value "4%", and the second information after the first information is an ingredient name "Caramel", then "4%" should correspond to "Caramel".

**Table 3**

| | |
|---|---|
| Ingredient content information | Gardenia Yellow 3.5%, 4% Caramel, Gellan Gum 70% |
| Optimization result | (Gardenia Yellow, 3.5%), (4%, Caramel), (Gellan Gum, 70%) |

From Tables 2 and 3 above, it can be seen that through optimization processing, the occurrence of mismatches between ingredient names and content values can be effectively resolved.

### Embodiment 2

For example, if the ingredient content information comprises "Chicken-Beef (Chicken 35%, Beef 65%) 15%", it is difficult to determine which ingredient name the content value "15%" after the parentheses corresponds to, which can easily lead to hierarchical extraction errors.

To address this issue, content within parentheses comprised in the identification result is identified, wherein an ingredient name is inside the parentheses, and an ingredient name adjacent to the parentheses and a content value adjacent to the parentheses are respectively positioned on opposing sides outside the parentheses, and a correspondence among the content, the ingredient name adjacent to the parentheses and the content value adjacent to the parentheses is established.

For example, the content in the parentheses is identified to obtain the corresponding relationship as "(Chicken, 35%)" and "(Beef, 65%)". Then, an correspondence is established between the ingredient name "Chicken-Beef" adjacent to the parentheses and the content value "15%".

**Table 4**

| | |
|---|---|
| Ingredient content information | Chicken-Beef (Chicken 35%, Beef 65%) 15% |
| Optimization result | (Chicken, 35%), (Beef, 65%), (Chicken-Beef, 15%) |

It should be noted that in the ingredient content information, entries like "Calcium Carbonate (15%)" do not involve a hierarchical structure. To avoid processing errors, in this embodiment, it is specified that there must be an ingredient name inside the parentheses, and on both sides outside the parentheses, there should be an ingredient name and a content value adjacent to the parentheses respectively. This ensures the correct processing of content with a hierarchical structure.

### Embodiment 3

For example, the ingredient content information comprises "Dried Meat Floss 10%~20%". In this case, there is a common issue where only the ingredient name "Dried Meat Floss" is correctly matched with the content value "10%", while the content value "20%" fails to be matched with the ingredient name "Dried Meat Floss".

To address this issue, first identification information and second identification information is generated, wherein the identification result comprises a connector, with a first content value positioned on the left of the connector and a second content value positioned on the right, the first identification information comprises information that an ingredient name associated with the connector is greater than the first content value, and the second identification information comprises information that the ingredient name associated with the connector is less than the second content value.

For example, in the case where the ingredient content information comprises "Dried Meat Floss 10%~20%", the ingredient content information comprises a connector "~", with the content values "10%" and "20%" positioned at each end of the connector respectively. In this case, the ingredient content information can be broken down into "Dried Meat Floss > 10%" and "Dried Meat Floss < 20%" to obtain an accurate content range, as shown in Table 5.

**Table 5**

| | |
|---|---|
| Ingredient content information | Dried Meat Floss 10%~20% |
| Optimization result | (Dried Meat Floss > 10%), (Dried Meat Floss < 20%) |

### Embodiment 4

Similar to the situation involved in Embodiment 1. For example, the ingredient content information includes "Gardenia Yellow 3.5%, 4% Caramel, and 70% Gellan Gum". If "Gardenia Yellow" is not identified, a mismatch between the ingredient names and the content values will occur, as shown in Table 1.

To address this issue, a punctuation mark after each ingredient name and each content value in the identification result is added; the punctuation mark is used as a grouping boundary to obtain a plurality of groups, wherein in a case where a group comprises only one ingredient name, a predetermined content value is added after the one ingredient name; and in a case where a group comprises only one content value, a predetermined ingredient name is added before the content value; and adjacent first group and second group are merged, wherein the first group comprises a first ingredient name and a predetermined content value, and the second group comprises a predetermined ingredient name and a second content value, and deleting the predetermined ingredient name and the predetermined content value to establish a correspondence between the first ingredient name and the second content value.

For example, in the identification result, a punctuation mark is added after each ingredient name and each content value. Next, multiple groups are obtained using the punctuation marks as grouping boundaries, as shown in processing result 1 in Table 6.

Next, since a first group only includes one ingredient name "Gardenia Yellow", a predetermined content value is added after that ingredient name, resulting in "(Gardenia Yellow, =, 100%)". Since a second group adjacent to the first group only includes one content value "3.5%", a predetermined ingredient name is added before the content value, resulting in (null, =, 3.5%), and so forth. The processing results obtained are shown in processing result 2 in Table 6.

Next, since the content value "100%" is included in the first group and the predetermined ingredient name "null" is included in the adjacent second group, the first group and the second group are merged to obtain a new group including "(Gardenia Yellow, =, 3.5%)" and so forth. The processing results obtained are shown in the optimization results in Table 6.

**Table 6**

| | |
|---|---|
| Ingredient content information | Gardenia Yellow 3.5%, 4% Caramel, Gellan Gum 70% |
| Processing result 1 | (Gardenia Yellow), (3.5%), (Caramel), (4%), (Gellan Gum), (70%) |
| Processing result 2 | (Gardenia Yellow, =, 100%), (null, =, 3.5%), (Caramel, =, 100%), (null, =, 4%), (Gellan Gum, =, 100%), (null, =, 70%) |
| Optimization result | (Gardenia Yellow, =, 3.5%), (Caramel, =, 4%), (Gellan Gum, =, 70%) |

It can thus be seen that through the aforementioned optimization process, the issue of mismatched ingredient names and content values can be effectively resolved.

In step 102, the plurality of ingredient names and the plurality of content values are compared with a predetermined food safety standard database to determine a first risk score of the edible commodity.

It should be noted that by comparing the obtained the ingredient names and their corresponding content values with the food safety standards database, it is determined whether the content values corresponding to the ingredient names are within predetermined ranges, and a first risk score is determined for the edible commodity based on the judgment result.

In some embodiments, first risk description information for the edible commodity is generated, wherein the first risk description information includes ingredients whose contents do not meet the requirements of the food safety standards database.

For example, if the ingredient "Black Bean Red" in the edible commodity exceeds regulatory limits, the first risk description information includes: "(Ingredients exceeding regulatory limits: 'Black Bean Red')".

In step 103, a second risk score of a plurality of access information of the edible commodity comprised in the customs clearance data is determined based on a food access knowledge base.

In some embodiments, the access information comprises whether the edible commodity has exceeded shelf life, and further comprises at least one of: whether a country of origin of the edible commodity is permitted for access, whether the edible commodity has an origin certification document, whether a consignee of the edible commodity holds an import license, whether a manufacturing enterprise of the edible commodity is validly registered, whether the manufacturing enterprise of the edible commodity has a production and processing license, or whether the manufacturing enterprise of the edible commodity has an inspection and quarantine certificate.

It should be noted that since the judgment result for the multiple access information items are merely binary (0 or 1), for instance, in a case of an import license, there are only two scenarios: either the import license is present or absent, these access information can accurately reflect the risk associated with the edible commodity. In addition, the multiple access information play a decisive role in assessing the risk of the edible commodity. Specifically, if any one of these access information fails to meet the required conditions, the edible commodity will be deemed to pose a risk. Therefore, the above multiple access information are directly used to assess the risk of the edible commodity.

In some embodiments, second risk description information for the edible commodity is generated, wherein the second risk description information includes access information that fail to meet the requirements of the food access knowledge base.

For example, if the consignee of the edible commodity does not possess an import license, the second risk description information would include: "(The consignee does not have an import license)".

In some embodiments, a first risk vector is generated, wherein the i-th element in the first risk vector corresponds to the risk score of the i-th access information among the plurality of access information, with **1** ≤ **i ≤ N**, N being the total number of the plurality of access information.

It should be noted that generating the first risk vector facilitates a quick identification of which among the multiple access information fail to meet the requirements based on the first risk vector.

For example, the first risk vector is [0,1,0,0,0,0,0]. Since the second element in the first risk vector corresponds to whether the consignee of the edible commodity possesses an import license, the absence of an import license for the consignee can be quickly determined based on the first risk vector.

In step 104, historical risk information of the edible commodity is obtained.

In some embodiments, the historical risk information comprises at least one of: a historical risk of a country of origin of the edible commodity, a historical risk of a manufacturer of the edible commodity, a historical risk of the edible commodity, a packaging dispersion of the edible commodity, a historical number of amendment requests made by the declaring entity of the edible commodity, or a degree to which the edible commodity is close to expiration.

For example, the historical risk of a country of origin of the edible commodity is calculated based on the historical black sample data pertaining to its country of origin; the historical risk of a manufacturer of the edible commodity is calculated based on the historical black sample data of its manufacturer; the historical risk of the edible commodity is calculated based on its historical black sample data; the packaging dispersion of the edible commodity is calculated based on its packaging type; the historical number of amendment requests made by the declaring entity of the edible commodity is counted; and the degree to which the edible commodity is close to expiration is calculated based on the time elapsed until its expiration date.

It should be noted that, unlike the multiple access information mentioned above, the historical risk information involved here serves as a non-determinative variable. Therefore, during supervised learning, there will be no significant occurrence of weight dominance. If any single piece of admissibility information is incorporated, it will cause the importance of other risk-related information to be overshadowed or "grabbed" by this admissibility information, ultimately leading to model inaccuracy.

In step 105, a third risk score of the edible commodity is determined based on the historical risk information.

In some embodiments, an ensemble learning model (e.g., a Random Forest model) is employed to process the historical risk information, the aforementioned six-dimensional historical risk information are integrated through the supervised learning to derive a third risk score. For example, the third risk score is between 0-1.

It should be noted that since black samples may be determined by multiple variables collectively, only the third risk score is output here without specifying the underlying risk factors.

In step 106, an import risk score of the edible commodity is determined based on the first risk score, the second risk score, and the third risk score.

In some embodiments, the import risk score of the edible commodity is determined based on the sum of the first risk score, the second risk score, and the third risk score.

For example, if the first risk score is 1, the second risk score is 1, and the third risk score is 0.00212802, then the import risk score of the edible commodity is 2.00212802.

In some embodiments, the first risk score and the third risk score are inserted into the first risk vector to obtain a second risk vector. Therefore, based on the second risk vector, it is convenient to understand which dimension of the edible commodity's information does not meet the requirements.

In some embodiments, risk cause information for the edible commodity is generated based on the first risk description information and the second risk description information. Thus, the specific causes of import risks can be conveniently identified.

FIG. 3 is a flowchart of a risk detection method according to another embodiment of the present disclosure. As shown in FIG. 3, an ingredient content judgment module is used to identify the ingredient content information of an edible commodity included in customs clearance data to obtain multiple ingredient names and corresponding content values. The multiple ingredient names and corresponding content values are compared with a predetermined food safety standards database to determine a first risk score and the names of excessive ingredients of the edible commodity. An admissibility information assessment module is used to determine a second risk score and a risk vector of multiple access information for the edible commodity included in the customs clearance data based on the food access knowledge base. By historical risk modeling based on historical data, historical risk information can be obtained. A risk information analysis module is used to determine a third risk score of the edible commodity based on the historical risk information. An import risk score of the edible commodity is determined based on the first risk score, the second risk score, and the third risk score. The first and third risk scores are inserted into a risk vector to obtain an updated risk vector. Risk cause information is generated for the edible commodity based on first risk description information and second risk description information.

For example, the import risk score of a certain edible commodity is:
[2.00212802]

The updated risk vector is:
[1, 0, 1, 0, 0, 0, 0, 0, 0.00212802]

Since the first element of this risk vector indicates whether the ingredient exceeds a prescribed threshold, the third element indicates whether the import license is absent, and the ninth element indicates whether the historical information poses a risk. It can be concluded that the import risk score of this edible commodity is attributable to ingredient standards violations, lack of import authorization, and existing historical risks.

The corresponding risk cause information includes:
[Ingredients exceeding regulatory limits: 'Black Bean Red', the consignee does not have a valid import license]

By implementing the risk detection method disclosed in the preceding embodiments, the import risk of edible commodities can be assessed conveniently and accurately, thereby effectively reducing labor costs.

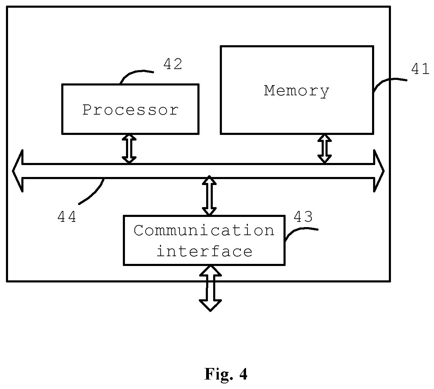

FIG. 4 is a schematic structural diagram of a risk detection apparatus according to one embodiment of the present disclosure. As shown in FIG. 4, the risk detection apparatus includes a memory 41 and a processor 42.

The memory 41 is used to store instructions. The processor 42 is coupled to the memory 41, and is configured to, based on instructions stored in the memory, carry out a method involved in any one of the embodiments of FIG. 1.

As shown in FIG. 4, the risk detection apparatus also includes a communication interface 43 for exchanging information with other devices. In addition, the risk detection apparatus further includes a bus 44. The processor 42, the communication interface 43, and the memory 41 perform communication with each other through the bus 44.

The memory 41 may include a high speed RAM memory, and may also include a non-volatile memory such as at least one disk storage device. The memory 41 may also be a memory array. The memory 41 may also be partitioned into blocks, which may be combined into virtual volumes according to a certain rule.

In addition, the processor 42 may be a central processing unit (CPU), or may be an Application Specific Integrated Circuit (ASIC) or one or more integrated circuits configured to implement the embodiments of the present disclosure.

The present disclosure further discloses a computer-readable storage medium stored thereon computer instructions that, when executed by a processor, implement the method according to any one of the embodiments shown in FIG. 1.

In the above embodiments of the present disclosure, the following beneficial effects can be achieved.
1. The present disclosure presents a supervised learning-based modeling approach that integrates machine learning into risk diagnosis, enabling quantitative assessment of risk levels for edible commodities. The method facilitates real-time risk discrimination while significantly reducing labor costs.
2. The present disclosure incorporates multi-factor collaborative discrimination scenarios into ensemble learning, thereby enhancing the feasibility of real-world deployment for risk control.
3. The present disclosure employs a hybrid approach combining framework optimization with logical refinement during ingredient content identification, enabling language models to generate both precise results and interpretable rationales.
4. The present disclosure provides not only risk scores but also risk cause information, enabling both intuitive result comprehension and rapid problem localization.

In some embodiments, the above functional modules can be implemented as a general-purpose processor for performing the functions described in this disclosure, Programmable logic controller (PLC), digital signal processor (DSP), application specific integrated circuit (ASIC), field programmable gate array (FPGA) or other programmable logic devices, discrete gates or transistor logic devices, discrete hardware components or any appropriate combination thereof.

A person skilled in the art can understand that all or part of the steps for carrying out the method in the above embodiments can be completed by hardware or a program instructing the related hardware, wherein the program can be stored in a computer readable storage medium. The storage medium may be a read-only memory (ROM), a magnetic disk or a compact disk (CD).

The above description of this invention is given for illustration and description, but is not exhaustive and is not intended to limit the present invention to the form disclosed herein. Various modifications and variations are apparent for a person of ordinary skill in the art. Embodiments are selected and described for a better illustration of the principle and practical application of this invention, so that those skilled in the art can understand this invention and envisage various embodiments with various modifications suited to specific usages.

## Claims

1. A risk detection method, comprising:
identifying ingredient content information of an edible commodity comprised in customs clearance data to obtain a plurality of ingredient names and a plurality of content values corresponding to the plurality of ingredient names;
comparing the plurality of ingredient names and the plurality of content values with a predetermined food safety standard database to determine a first risk score of the edible commodity;
determining, based on a food access knowledge base, a second risk score of a plurality of access information of the edible commodity comprised in the customs clearance data;
obtaining historical risk information of the edible commodity;
determining a third risk score of the edible commodity based on the historical risk information; and
determining an import risk score of the edible commodity based on the first risk score, the second risk score, and the third risk score.

2. The risk detection method according to claim 1, wherein the determining the import risk score of the edible commodity comprises:
determining the import risk score of the edible commodity based on a sum of the first risk score, the second risk score, and the third risk score.

3. The risk detection method according to claim 1, wherein the identifying the ingredient content information of the edible commodity comprised in the customs clearance data comprises:
processing the ingredient content information by using a first machine learning model to obtain embeddings;
processing the embeddings by using a second machine learning model to obtain a feature vector;
processing the feature vector by using a third machine learning model to obtain an identification result, wherein the identification result comprises the plurality of ingredient names and the plurality of content values; and
optimizing a correspondence between the plurality of ingredient names and the plurality of content values.

4. The risk detection method according to claim 3, wherein the optimizing the correspondence between the plurality of ingredient names and the plurality of content values comprises:
adding a punctuation mark after each ingredient name and after each content value in the identification result;
using a punctuation mark after a second information that follows a first information to be processed as a grouping boundary, wherein the first information is one of an ingredient name or a content value, and the second information is the other of the ingredient name or the content value; and
establishing a correspondence between the first information and the second information.

5. The risk detection method according to claim 3, wherein the optimizing the correspondence between the plurality of ingredient names and the plurality of content values comprises:
identifying content within parentheses comprised in the identification result, wherein an ingredient name is inside the parentheses, and an ingredient name adjacent to the parentheses and a content value adjacent to the parentheses are respectively positioned on opposing sides outside the parentheses; and
establishing a correspondence among the content, the ingredient name adjacent to the parentheses and the content value adjacent to the parentheses.

6. The risk detection method according to claim 3, wherein the optimizing the correspondence between the plurality of ingredient names and the plurality of content values comprises:
generating first identification information and second identification information, wherein the identification result comprises a connector, with a first content value positioned on the left of the connector and a second content value positioned on the right, the first identification information comprises information that an ingredient name associated with the connector is greater than the first content value, and the second identification information comprises information that the ingredient name associated with the connector is less than the second content value.

7. The risk detection method according to claim 3, wherein the optimizing the correspondence between the plurality of ingredient names and the plurality of content values comprises:
adding a punctuation mark after each ingredient name and each content value in the identification result;
using the punctuation mark as a grouping boundary to obtain a plurality of groups, wherein in a case where a group comprises only one ingredient name, a predetermined content value is added after the one ingredient name; and in a case where a group comprises only one content value, a predetermined ingredient name is added before the content value; and
merging adjacent first group and second group, wherein the first group comprises a first ingredient name and a predetermined content value, and the second group comprises a predetermined ingredient name and a second content value, and deleting the predetermined ingredient name and the predetermined content value to establish a correspondence between the first ingredient name and the second content value.

8. The risk detection method according to claim 3, wherein:
the first machine learning model is a BERT model;
the second machine learning model is a BiLSTM model; and
the third machine learning model is a CRF model.

9. The risk detection method according to claim 1, wherein the access information comprises whether the edible commodity has exceeded shelf life, and further comprises at least one of:
whether a country of origin of the edible commodity is permitted for access;
whether the edible commodity has an origin certification document;
whether a consignee of the edible commodity holds an import license;
whether a manufacturing enterprise of the edible commodity is validly registered;
whether the manufacturing enterprise of the edible commodity has a production and processing license; or
whether the manufacturing enterprise of the edible commodity has an inspection and quarantine certificate.

10. The risk detection method according to claim 1, wherein the historical risk information comprises at least one of:
a historical risk of a country of origin of the edible commodity;
a historical risk of a manufacturer of the edible commodity;
a historical risk of the edible commodity;
a packaging dispersion of the edible commodity;
a historical number of amendment requests made by the declaring entity of the edible commodity; or
a degree to which the edible commodity is close to expiration.

11. The risk detection method according to claim 1, wherein the determining the third risk score of the edible commodity based on the historical risk information comprises:
processing the historical risk information by using an ensemble learning model to obtain the third risk score.

12. The risk detection method according to any one of claims 1 to 11, further comprising:
generating a first risk vector, wherein the i-th element in the first risk vector corresponds to the risk score of the i-th access information among the plurality of access information, with **1 ≤ i ≤ N**, N being the total number of the plurality of access information; and
inserting the first risk score and the third risk score into the first risk vector to obtain a second risk vector.

13. The risk detection method according to claim 12, further comprising:
generating first risk description information for the edible commodity, wherein the first risk description information comprises an ingredient whose content does not meet a requirement of the food safety standards database;
generating second risk description information for the edible commodity, wherein the second risk description information comprises an access information that does not satisfy a requirement of the food access knowledge base; and
generating risk cause information for the edible commodity based on the first risk description information and the second risk description information.

14. A risk detection apparatus, comprising:
at least one processor; and
at least one memory coupled to the at least one processor, storing program instructions which, when executed by the at least one processor, cause the at least one processor to implement a risk detection method according to any one of claims 1 to 13.

15. A computer readable storage medium stored thereon computer instructions that, when executed by a processor, implement the risk detection method according to any one of claims 1 to 13.

16. A computer program comprising computer instructions that, when executed by a processor, implement the risk detection method of any one of claims 1 to 13.
